# FASCICULE DE BREVET EUROPEEN

(11) **EP 0 687 055 B1**
(45) Date de publication et mention de la délivrance du brevet: **18.03.1998**
(21) Numéro de dépôt: 95401317.3
(22) Date de dépôt: 07.06.1995
(51) Int. Cl.: H02K 49/04

(54) **Perfectionnements aux transmissions de véhicules équipées de ralentisseurs à courants de Foucault, et aux organes de fixation pour de telles transmissions**
Verbesserungen an Kraftfahrzeuggetrieben mit Wirbelstrombremse und an den Getriebebefestigungsteilen
Improvements in motor vehicle transmissions having an Eddy current retarder brake, and in the mounting arrangement of these transmissions

(30) Priorité: 08.06.1994 FR 9407016
(43) Date de publication de la demande: 13.12.1995
(73) Titulaire: LABAVIA S.G.E., F-78180 Montigny le Bretonneux (FR)
(72) Inventeur: Courtois, Jean-Claude, F-95450 Vigny (FR); Disson, Jean-Yves, F-69410 Champagne au Mont d'Or (FR)
(74) Mandataire: Burbaud, Eric

(56) Documents cités:
- FR-A- 2 610 878
- GB-A- 2 122 035

## Description

La présente invention est relative aux transmissions de véhicules, notamment poids lourds, comportant un ralentisseur à courants de Foucault, et aux organes de fixation pour de telles transmissions.

Plus particulièrement, l'invention concerne une transmission de véhicule, comportant d'une part une boîte de vitesses qui peut être couplée à un moteur à explosion et qui présente un carter et un arbre de sortie, et d'autre part un ralentisseur à courants de Foucault qui est doté d'un stator et d'un rotor, le stator étant fixé au carter de la boîte de vitesses par des moyens de fixation comportant au moins un organe de fixation et le rotor étant lié à l'arbre de sortie de la boîte de vitesses, le stator et le rotor comportant respectivement l'un une couronne de pôles électromagnétiques qui est centrée sur l'arbre de sortie de la boîte de vitesses, et l'autre au moins un élément annulaire en matériau magnétique qui est également centré sur l'arbre de sortie de la boîte de vitesses, les pôles et l'élément annulaire étant séparés par un entrefer de faible épaisseur.

Les documents GB-A- 2 122 035 et FR-A- 2 610 878 décrivent des transmissions de véhicules du genre mentionné ci-dessus.

Dans une transmission de véhicule de ce type, le carter de la boîte de vitesses transmet au stator du ralentisseur des vibrations qui sont engendrées par le moteur à explosion du véhicule. Ces vibrations comportent en particulier des vibrations en torsion autour de l'arbre de sortie de la boîte de vitesses, vibrations qui sont engendrées par les explosions successives qui ont lieu dans le moteur.

Ces vibrations de torsion entraînent une fatigue des organes de fixation, qui dans l'art antérieur était compensée par un surdimensionnement desdits organes de fixation.

Toutefois, ce surdimensionnement tend à alourdir le véhicule, ce qui n'est jamais souhaitable, et d'autre part il n'est pas certain qu'il soit toujours suffisant, compte tenu des puissances croissantes des moteurs à explosion.

La présente invention a notamment pour but de résoudre ce problème technique.

A cet effet, selon l'invention, une transmission de véhicule du genre en question est essentiellement caractérisée en ce que l'organe de fixation comporte deux pièces rigides fixées rigidement l'une au stator du ralentisseur et l'autre au carter de la boîte de vitesses, chacune des deux pièces comportant une portée qui représente au moins une fraction d'une surface de révolution centrée sur l'arbre de sortie de la boîte de vitesses, les deux portées étant disposées en regard l'une de l'autre et séparées l'une de l'autre par une couche d'un matériau élastomère, cette couche de matériau élastomère étant adhérisée aux deux portées en permettant un certain débattement angulaire des deux pièces rigides l'une par rapport à l'autre, en rotation autour de l'arbre de sortie de la boîte de vitesses, les deux pièces rigides étant sensiblement immobilisées l'une par rapport à l'autre dans une direction parallèle à l'épaisseur de l'entrefer.

Dans des modes de réalisation préférés, on a recours en outre à l'une et/ou à l'autre des dispositions suivantes :
- l'une des deux portées a la forme d'une gorge ouverte radialement, tandis que l'autre des deux portées est une partie saillante de forme sensiblement complémentaire de la gorge, qui pénètre radialement dans ladite gorge, les moyens de fixation étant angulairement répartis autour de l'arbre de sortie de la boîte de vitesses, et la couche de matériau élastomère interposée entre la gorge et la partie saillante présentant, au moins dans la direction parallèle à l'épaisseur de l'entrefer, une épaisseur suffisamment faible pour interdire sensiblement tout déplacement relatif des deux pièces rigides l'une par rapport à l'autre dans ladite direction parallèle à l'épaisseur de l'entrefer ;
- l'épaisseur de la couche de matériau élastomère est comprise entre 1 et 3 mm ;
- l'épaisseur de l'entrefer s'étend axialement, et le matériau élastomère est disposé au moins axialement de part et d'autre de la partie saillante qui pénètre dans la gorge ;
- la gorge a sensiblement une section en U qui présente un fond, et le matériau élastomère est également disposé radialement entre la partie saillante et le fond de la gorge en U ; ainsi on peut choisir une rigidité du montage déterminée dans chacune des directions axiale, radiale et circonférentielle ;
- le matériau élastomère est un silicone ;
- les moyens de fixation comportent plusieurs organes de fixation angulairement répartis autour de l'arbre de sortie de la boîte de vitesses, les portées de chaque organe de fixation s'étendant chacune angulairement sur une longueur curviligne comprise entre 50 et 100 millimètres ;
- les moyens de fixation comportent plusieurs organes de fixation, au moins un organe de fixation présentant une butée qui est solidaire d'une de ses deux pièces rigides et qui est adaptée à buter contre l'autre de ses deux pièces rigides en limitant le débattement angulaire relatif du stator par rapport au carter de la boîte de vitesses dans un premier sens angulaire, et au moins un organe de fixation présentant une butée qui est solidaire d'une de ses deux pièces rigides et qui est adaptée à buter contre l'autre de ses deux pièces rigides en limitant le débattement angulaire relatif du stator par rapport au carter de la boîte de vitesses dans un deuxième sens angulaire de rotation ;
- une partie de la couche de matériau élastomère est interposée avec un certain jeu entre la butée et la pièce rigide qui coopère avec ladite butée.

Par ailleurs, l'invention a également pour objet un organe de fixation pour monter un stator d'un ralentisseur à courants de Foucault sur un carter d'une boîte de vitesses dans une transmission de véhicule telle que définie ci-dessus, cet organe de fixation étant caractérisé en ce qu'il comporte deux pièces rigides présentant chacune des moyens d'attache, respectivement pour fixer rigidement lesdites pièces rigides l'une au stator du ralentisseur et l'autre au carter de la boîte de vitesses, ces deux pièces comportant chacune une portée qui représente au moins une fraction d'une surface de révolution centrée sur l'arbre de sortie de la boîte de vitesses lorsque le stator est monté sur le carter au moyen de l'organe de fixation, les deux portées étant disposées en regard l'une de l'autre et séparées l'une de l'autre par une couche d'un matériau élastomère, l'une des deux portées ayant la forme d'une gorge ouverte radialement, tandis que l'autre des deux portées est une partie saillante de forme sensiblement complémentaire de la gorge, qui pénètre radialement dans ladite gorge, la couche de matériau élastomère étant disposée axialement de part et d'autre de la partie saillante et radialement entre la partie saillante et la gorge, et cette couche ayant une épaisseur comprise entre 1 et 3 millimètres.

D'autres avantages de l'invention apparaîtront au cours de la description suivante d'une de ses formes de réalisation, donnée à titre d'exemple non limitatif, en regard des dessins joints.

Sur les dessins :
- la figure 1 représente de façon schématique un groupe motopropulseur de véhicule poids lourd,
- la figure 2 est une vue en coupe axiale partielle d'un ralentisseur à courants de Foucault monté sur le carter de la boîte de vitesses du groupe motopropulseur de la figure 1,
- la figure 3 est une vue schématique en élévation selon la direction III de la figure 2,
- la figure 4 est une vue de détail de la figure 2, et
- la figure 5 est une vue en coupe selon la ligne V-V de la figure 4.

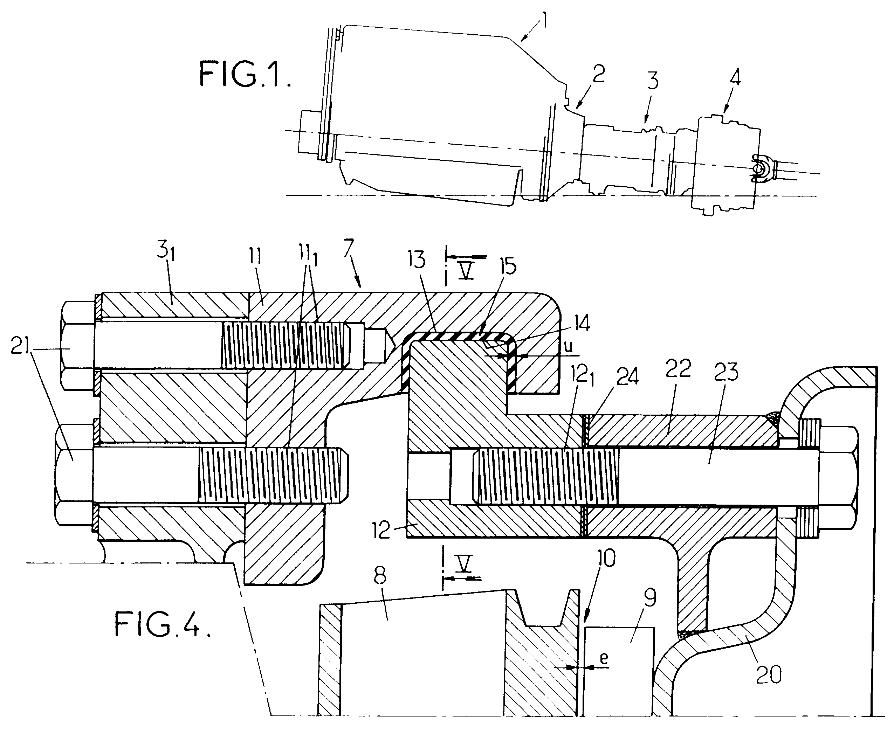

Le groupe motopropulseur représenté schématiquement sur la figure 1, comporte en un ensemble monobloc, un moteur 1, un embrayage 2, une boîte de vitesses 3 et un ralentisseur 4 à courants de Foucault, la boîte de vitesses 3 pouvant être couplée au moteur 1 par l'intermédiaire de l'embrayage 2 et le ralentisseur 4 étant couplé en permanence à l'arbre de sortie de la boîte de vitesses 3.

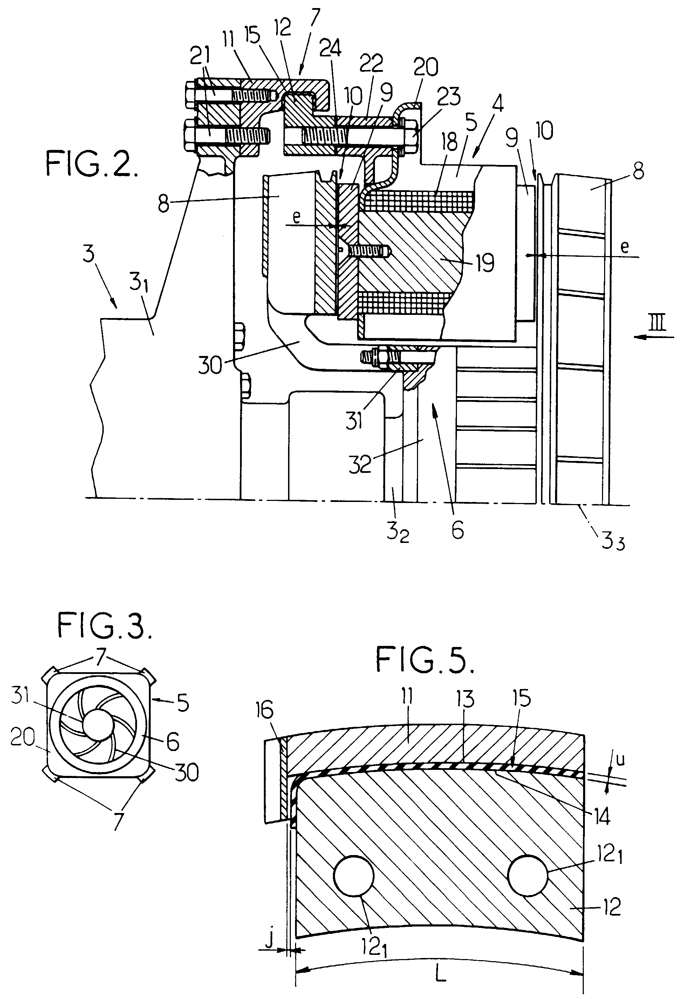

La figure 2 représente plus en détail le montage du ralentisseur 4 sur la boîte de vitesses 3. Le ralentisseur comporte d'une part un stator 5 qui est fixé au carter 3₁ de la boîte de vitesses, et d'autre part un rotor 6 qui est fixé rigidement à l'arbre de sortie 3₂ de la boîte de vitesses, et qui tourne avec cet arbre de sortie autour d'un axe de rotation 3₃.

Dans l'exemple représenté, le rotor comporte deux disques 8 disposés radialement, écartés axialement l'un de l'autre et connectés radialement vers l'intérieur à l'arbre de sortie 3₂ de la boîte de vitesses par l'intermédiaire de successivement deux couronnes d'aubages 30 formant ailettes de refroidissement et deux anneaux 31 vissés sur un plateau intermédiaire 32.

D'autre part, le stator 5 comporte, en face de chaque disque 8, une couronne de pôles électromagnétiques 9. Au sein de chaque couronne, les pôles 9 sont alternativement Nord et Sud, et sont séparés du disque 8 en regard de la couronne par un entrefer 10 qui s'étend radialement, et qui présente une épaisseur axiale e très faible, généralement comprise entre un et trois millimètres, et souvent de l'ordre de 1,5 millimètres. L'épaisseur de l'entrefer peut varier pendant le fonctionnement du ralentisseur, du fait du jeu de montage de l'arbre de sortie 3₂ de la boîte de vitesses et du fait des dilatations thermiques.

Les pôles 9 des deux couronnes de pôles sont associés par paires, chaque paire de pôles étant magnétisée par une bobine 18 lorsque cette bobine est parcourue par un courant électrique.

Chaque bobine 18 entoure un noyau 19 en matériau ferromagnétique qui s'étend axialement entre les pôles 9 d'une paire de pôles. Eventuellement, les pôles 9 pourraient d'ailleurs simplement être constitués par les extrémités axiales des noyaux 19.

Les pôles 9, les bobines 18 et les noyaux 19 du stator sont solidaires d'un flasque 20, généralement en matériau amagnétique, qui lui-même est fixé au carter 3₁ de la boîte de vitesses par l'intermédiaire d'organes de fixation 7, répartis angulairement autour du ralentisseur.

Comme on peut le voir sur la figure 3, ces organes de fixation 7 peuvent éventuellement être au nombre de quatre et être disposés aux quatre coins du flasque 20 du stator lorsque ce flasque a une forme sensiblement carrée.

Comme représenté plus en détail sur la figure 4, chaque organe de fixation 7 comporte deux pièces rigides 11, 12 métalliques qui sont rigidement fixées respectivement, la première au carter de la boîte de vitesses, et la deuxième au flasque 20 du stator du ralentisseur.

La première pièce rigide 11 comporte des trous filetés 11₁ qui reçoivent des vis 21 permettant de fixer ladite première pièce 11 au carter de la boîte de vitesses.

D'autre part, la première pièce 11 comporte une gorge 13 ouverte radialement vers l'intérieur qui représente une fraction de surface de révolution centrée sur l'axe de rotation 3₃. Dans l'exemple représenté, cette gorge 13 présente une section en U avec un fond sensiblement rectiligne et deux branches également sensiblement rectilignes.

La deuxième pièce rigide 12 est également percée de trous filetés 12₁ qui permettent la fixation de ladite pièce 12 sur le flasque 20 du stator, au moyen d'une pièce intermédiaire 22 traversée par des vis 23 qui s'engagent dans les trous filetés 12₁. De plus, des cales de réglage 24 rigides sont en général interposées entre la pièce intermédiaire 22 et la pièce rigide 12.

La pièce rigide 12 comporte une partie saillante 14 dirigée radialement vers l'extérieur, qui présente une forme sensiblement complémentaire de la forme de la gorge 13, la partie saillante 14 étant toutefois séparée du fond et des deux branches de la gorge 13 par un espace rempli d'une couche mince 15 de matériau élastomère, de préférence un silicone. Cette couche mince est de préférence continue, mais pourrait éventuellement être discontinue.

La couche de matériau élastomère présente une faible épaisseur u de l'ordre de un à trois millimètres, par exemple d'environ deux millimètres. Cette épaisseur peut éventuellement être différente le long des branches et du fond de la gorge en U, de façon à régler la rigidité du montage dans chacune des directions axiale et radiale. De plus, la rigidité du montage en direction circonférentielle peut également être réglée par la longueur curviligne de la gorge 13.

Comme représenté sur la figure 5, la gorge 13 s'étend sur toute l'étendue angulaire de la première pièce rigide 11, sur une longueur curviligne L qui peut s'étendre de cinquante à cent millimètres dans les cas les plus courants, et qui peut valoir par exemple environ quatrevingts millimètres.

Ainsi, la deuxième pièce rigide 12 peut se déplacer angulairement par rapport à la première pièce rigide 11, en rotation autour de l'axe 3₃, en faisant travailler la couche d'élastomère 15 en cisaillement.

Par exemple, pour une couche d'élastomère d'un à trois millimètres d'épaisseur réalisée en silicone, on peut obtenir sans difficulté des déplacements relatifs entre les pièces 11 et 12 d'environ 0,5 à 1,5 millimètres dans la direction angulaire.

Par contre, du fait de la faible épaisseur du matériau élastomère, le déplacement entre les pièces 11 et 12 dans les directions axiale et radiale est extrêmement réduit. Par exemple, toujours dans le cas d'une couche en élastomère 15 d'une épaisseur d'environ un à trois millimètres réalisée en silicone, on peut obtenir des déplacements relatifs axiaux et radiaux entre les pièces 11 et 12 qui soient limités à 0,02 millimètre. De la sorte, on ne risque pas de diminuer l'épaisseur d'un des entrefers 10 jusqu'à une valeur qui risquerait de ne plus garantir l'absence de contact entre le rotor et le stator.

A titre de perfectionnement préféré, mais non indispensable, il est possible de fixer sur la première pièce rigide 11 d'au moins un organe de fixation 7, une butée 16 en métal, qui peut être par exemple soudée sur la première pièce rigide 11. Cette butée 16 peut être disposée à une extrémité angulaire de la gorge 13, pour limiter le déplacement angulaire relatif de la deuxième pièce rigide 12 par rapport à la première pièce rigide 11 dans un sens angulaire déterminé lorsque la deuxième pièce rigide 12 vient en contact avec la butée 16.

Avantageusement, la couche d'élastomère 15 se prolonge sur le côté de la deuxième pièce rigide 12 en regard de la butée 16, de façon à amortir les chocs entre la butée 16 et la deuxième pièce rigide 12 notamment en cas de dégradation du matériau élastomère. Un jeu j qui peut être par exemple d'environ 0,5 millimètre est alors prévu entre ce prolongement de la couche d'élastomère 15 et la butée 16.

Une butée 16 identique est prévue dans l'autre sens angulaire sur au moins un autre organe de fixation 7, ou éventuellement sur le même organe de fixation 7.

La présente invention n'est pas limitée à la forme de réalisation particulière qui vient d'être décrite, mais embrasse au contraire toutes les variantes de l'invention, notamment celles dans lesquelles :
- l'épaisseur de l'entrefer est dirigée radialement et non plus axialement,
- le stator du ralentisseur représente l'induit tandis que le rotor comporte les pôles inducteurs,
- le rotor du ralentisseur comporte un nombre de disques ferromagnétiques différent de deux,
- les différents organes de fixation 7 sont reliés entre eux en formant un ensemble fonctionnel unique,
- la gorge 13 des organes de fixation est ouverte radialement vers l'extérieur et non vers l'intérieur,
- la gorge 13 est formée dans la pièce rigide qui est fixée au stator tandis que la partie saillante 14 appartient à la pièce rigide qui est fixée au carter de la boîte de vitesses.

## Revendications

1. Transmission de véhicule, comportant d'une part une boîte de vitesses (3) qui peut être couplée à un moteur à explosion (1) et qui présente un carter (3₁) et un arbre de sortie (3₂), et d'autre part un ralentisseur (4) à courants de Foucault qui est doté d'un stator (5) et d'un rotor (6), le stator étant fixé au carter (3₁) de la boîte de vitesses par des moyens de fixation comportant au moins un organe de fixation (7) et le rotor étant lié à l'arbre de sortie (3₂) de la boîte de vitesses, le stator et le rotor comportant respectivement l'un une couronne de pôles électromagnétiques (9) qui est centrée sur l'arbre de sortie (3₂) de la boîte de vitesses, et l'autre au moins un élément annulaire (8) en matériau magnétique qui est également centré sur l'arbre de sortie (3₂) de la boîte de vitesses, les pôles (9) et l'élément annulaire (8) étant séparés par un entrefer (10) de faible épaisseur (e),
caractérisé en ce que l'organe de fixation (7) comporte deux pièces rigides (11, 12) fixées rigidement l'une au stator (5) du ralentisseur et l'autre au carter (3₁) de la boîte de vitesses, chacune des deux pièces comportant une portée (13, 14) qui représente au moins une fraction d'une surface de révolution centrée sur l'arbre de sortie (3₂) de la boîte de vitesses, les deux portées (13, 14) étant disposées en regard l'une de l'autre et séparées l'une de l'autre par une couche (15) d'un matériau élastomère, cette couche de matériau élastomère étant adhérisée aux deux portées (13, 14) en permettant un certain débattement angulaire des deux pièces rigides (11, 12) l'une par rapport à l'autre, en rotation autour de l'arbre de sortie (3₂) de la boîte de vitesses, les deux pièces rigides (11, 12) étant sensiblement immobilisées l'une par rapport à l'autre dans une direction parallèle à l'épaisseur (e) de l'entrefer (10).

2. Transmission de véhicule selon la revendication 1, dans laquelle l'une des deux portées a la forme d'une gorge (13) ouverte radialement, tandis que l'autre des deux portées est une partie saillante (14) de forme sensiblement complémentaire de la gorge, qui pénètre radialement dans ladite gorge, les moyens de fixation (7) étant angulairement répartis autour de l'arbre de sortie (3₂) de la boîte de vitesses, et la couche de matériau élastomère interposée entre la gorge (13) et la partie saillante (14) présentant, au moins dans la direction parallèle à l'épaisseur (e) de l'entrefer, une épaisseur (u) suffisamment faible pour interdire sensiblement tout déplacement relatif des deux pièces rigides l'une par rapport à l'autre dans ladite direction parallèle à l'épaisseur de l'entrefer.

3. Transmission selon la revendication 2, dans laquelle l'épaisseur de la couche (15) de matériau élastomère est comprise entre 1 et 3 mm.

4. Transmission selon l'une quelconque des revendications 2 et 3, dans laquelle l'épaisseur (e) de l'entrefer (10) s'étend axialement, et le matériau élastomère est disposé au moins axialement de part et d'autre de la partie saillante (14) qui pénètre dans la gorge (13).

5. Transmission selon la revendication 4, dans laquelle la gorge (13) a sensiblement une section en U qui présente un fond, et dans laquelle le matériau élastomère est également disposé radialement entre la partie saillante (14) et le fond de la gorge en U.

6. Transmission selon l'une quelconque des revendications précédentes, dans laquelle le matériau élastomère est un silicone.

7. Transmission selon l'une quelconque des revendications précédentes, dans laquelle les moyens de fixation (7) comportent plusieurs organes de fixation angulairement répartis autour de l'arbre de sortie (3₂) de la boîte de vitesses, les portées (13, 14) de chaque organe de fixation s'étendant chacune angulairement sur une longueur curviligne (L) comprise entre 50 et 100 millimètres.

8. Transmission selon l'une quelconque des revendications précédentes, dans laquelle les moyens de fixation (7) comportent plusieurs organes de fixation, au moins un organe de fixation (7) présentant une butée (16) qui est solidaire d'une de ses deux pièces rigides et qui est adaptée à buter contre l'autre de ses deux pièces rigides en limitant le débattement angulaire relatif du stator (5) par rapport au carter (3₁) de la boîte de vitesses dans un premier sens angulaire, et au moins un organe de fixation (7) présentant une butée (16) qui est solidaire d'une de ses deux pièces rigides et qui est adaptée à buter contre l'autre de ses deux pièces rigides en limitant le débattement angulaire relatif du stator (5) par rapport au carter (3₁) de la boîte de vitesses dans un deuxième sens angulaire de rotation.

9. Transmission selon la revendication 8, dans laquelle une partie de la couche de matériau élastomère (15) est interposée avec un certain jeu (j) entre la butée (16) et la pièce rigide qui coopère avec ladite butée.

10. Organe de fixation (7) pour monter un stator (5) d'un ralentisseur (4) à courants de Foucault sur un carter (3₁) d'une boîte de vitesses dans une transmission de véhicule selon la revendication 5, cet organe de fixation (7) étant caractérisé en ce qu'il comporte deux pièces rigides (11, 12) présentant chacune des moyens d'attache (11₁, 12₁) respectivement pour fixer rigidement lesdites pièces rigides l'une au stator (5) du ralentisseur et l'autre au carter (3₁) de la boîte de vitesses, ces deux pièces comportant chacune une portée (13, 14) qui représente au moins une fraction d'une surface de révolution centrée sur l'arbre de sortie (3₂) de la boîte de vitesses lorsque le stator (5) est monté sur le carter (3₁) au moyen de l'organe de fixation, les deux portées (13, 14) étant disposées en regard l'une de l'autre et séparées l'une de l'autre par une couche (15) d'un matériau élastomère, l'une des deux portées ayant la forme d'une gorge (13) ouverte radialement, tandis que l'autre des deux portées est une partie saillante (14) de forme sensiblement complémentaire de la gorge, qui pénètre radialement dans ladite gorge, la couche de matériau élastomère étant disposée axialement de part et d'autre de la partie saillante (14) et radialement entre la partie saillante et la gorge (13), et cette couche ayant une épaisseur comprise entre 1 et 3 millimètres.

## Patentansprüche

1. Fahrzeugantrieb, der einerseits ein Getriebe (3), das an eine Brennkraftmaschine (1) ankoppelbar ist und ein Gehäuse (3₁) sowie eine Abtriebswelle (3₂) umfaßt, und andererseits ein Wirbelstrom-Auslaufteil (4) aufweist, das mit einem Stator (5) und einem Rotor (6) ausgestattet ist, wobei der Stator am Gehäuse (3₁) des Getriebes mittels Befestigungseinrichtungen befestigt ist, welche mindestens ein Befestigungselement (7) aufweisen, und der Rotor mit der Abtriebswelle (3₂) des Getriebes verbunden ist, und wobei der Stator bzw. der Rotor jeweils einen Kranz elektromagnetischer Pole (9) aufweist, der auf der Abtriebswelle (3₂) des Getriebes zentriert ist, und das jeweils andere Teil mindestens ein Ringteil (8) aus magnetischem Werkstoff, welches ebenfalls auf der Abtriebswelle (3₂) des Getriebes zentriert ist, und wobei die Pole (9) und das Ringteil (8) durch einen Luftspalt (10) geringer Stärke (e) voneinander getrennt sind,
dadurch gekennzeichnet, daß das Befestigungselement (7) zwei starre Teile (11, 12) aufweist, von denen das eine am Stator (5) des Auslaufteils und das andere am Gehäuse (3₁) des Getriebes jeweils starr befestigt ist, wobei jedes der beiden Teile einen Bereich (13, 14) aufweist, der mindestens einen Bruchteil einer auf der Abtriebswelle (3₂) des Getriebes zentrierten Revolutionsfläche darstellt, und wobei die beiden Bereiche (13, 14) einander gegenüber angeordnet und durch eine Schicht (15) aus Elastomermaterial voneinander getrennt sind, welche an den beiden Bereichen (13, 14) anhaftet und dabei eine gewisse Winkelbewegung der beiden starren Teile (11, 12) relativ zueinander unter Drehung um die Abtriebswelle (3₂) des Getriebes gestattet, wobei die beiden starren Teile (11, 12) relativ zueinander in einer zur Dicke (e) des Luftspalts (10) parallelen Richtung im wesentlichen feststehen.

2. Antrieb nach Anspruch 1, bei welchem einer der beiden Bereiche die Form einer radial offenen Auskehlung (13) besitzt, während der andere der beiden Bereiche ein vorspringender Abschnitt (14) mit einer zur Auskehlung im wesentlichen komplementären Form ist und radial in die Auskehlung eingreift, wobei die Befestigungseinrichtungen (7) angulär um die Abtriebswelle (3₂) des Getriebes verteilt sind und wobei die zwischen die Auskehlung (13) und den vorspringenden Abschnitt (14) eingesetzte Elastomerschicht zumindest in der zur Dicke (e) des Luftspalts parallelen Richtung eine Stärke (u) aufweist, die gering genug ist, um im wesentlichen jede relative Verschiebung der beiden starren Teile relativ zueinander in der zur Dicke des Luftspalts parallelen Richtung zu verhindern.

3. Antrieb nach Anspruch 2, bei welchem die Stärke der Schicht (15) aus Elastomermaterial zwischen 1 und 3 mm beträgt.

4. Antrieb nach einem der Ansprüche 2 und 3, bei welchem die Dicke (e) des Luftspalts (10) in axialer Richtung verläuft und das Elastomermaterial zumindest in axialer Richtung beiderseits des vorspringenden Abschnitts (14) angeordnet ist, der in die Auskehlung (13) eingreift.

5. Antrieb nach Anspruch 4, bei welchem die Auskehlung (13) im wesentlichen einen U-förmigen Querschnitt aufweist, welcher einen Boden besitzt und in welchem das Elastomermaterial auch in radialer Richtung zwischen dem vorspringenden Abschnitt (14) und dem Boden der U-förmigen Auskehlung angeordnet ist.

6. Antrieb nach einem der vorhergehenden Ansprüche, bei welchem das Elastomermaterial ein Silikon ist.

7. Antrieb nach einem der vorhergehenden Ansprüche, bei welchem die Befestigungseinrichtungen (7) mehrere angulär um die Abtriebswelle (3₂) des Getriebes verteilte Befestigungselemente aufweist, wobei sich die Bereiche (13, 14) jedes Befestigungsteils sich jeweils angulär über eine gebogene Länge (L) zwischen 50 und 100 Millimeter erstrecken.

8. Antrieb nach einem der vorhergehenden Ansprüche, bei welchem die Befestigungseinrichtungen (7) mehrere Befestigungsteile aufweisen, von denen mindestens eines (7) einen Anschlag (16) aufweist, der fest mit einem ihrer beiden starren Teile verbunden ist und so gestaltet ist, daß er gegen das andere ihrer beiden starren Teile in Anlage kommt und dabei die anguläre Verschiebung relativ zum Stator (5) bezüglich des Gehäuses (3₁) des Getriebes in einer ersten Winkelrichtung begrenzt, und von denen zumindest ein Befestigungsteil (7) einen Anschlag (16) aufweist, der fest mit einem ihrer beiden starren Teile verbunden ist und so gestaltet ist, daß er gegen das andere ihrer beiden starren Teile in Anlage kommt und dabei die anguläre Verschiebung relativ zum Stator (5) bezüglich des Gehäuses (3₁) des Getriebes in einer zweiten Winkelrichtung begrenzt.

9. Antrieb nach Anspruch 8, bei welchem ein Teil der Schicht (15) aus Elastomermaterial mit einem gewissen Spiel (j) zwischen den Anschlag (16) und das mit diesem Anschlag zusammenwirkende starre Teil eingesetzt ist.

10. Befestigungsteil (7) zur Befestigung eines Stators (5) eines Wirbelstrom-Auslaufteils (4) auf einem Gehäuse (3₁) eines Getriebes bei einem Fahrzeugantrieb nach Anspruch 5, wobei dieses Befestigungsteil (7) dadurch gekennzeichnet ist, daß es zwei starre Teile (11, 12) aufweist, von denen jedes entsprechende Befestigungsmittel (11₁, 12₁) jeweils zur starren Befestigung der starren Teile, und zwar des einen am Stator (5) des Auslaufteils und des anderen am Gehäuse (3₁) des Getriebes, besitzt, wobei diese beiden Teile jeweils einen Bereich (13, 14) aufweisen, der mindestens einen Bruchteil einer auf der Abtriebswelle (3₂) des Getriebes zentrierten Revolutionsfläche darstellt, wenn der Stator (5) auf dem Gehäuse (3₁) mittels des Befestigungsteils montiert ist, und wobei die beiden Bereiche (13, 14) einander gegenüber angeordnet und voneinander durch eine Schicht (15) aus Elastomermaterial getrennt sind und einer der beiden Bereiche die Form einer in radialer Richtung offenen Auskehlung (13) besitzt, wohingegen der andere der beiden Bereiche ein vorspringender Abschnitt (14) mit einer zur Auskehlung im wesentlichen komplementären Form ist, welcher radial in die Auskehlung eingreift, wobei die Schicht aus Elastomermaterial in axialer Richtung beiderseits des vorspringenden Abschnitts (14) und radial zwischen dem vorspringenden Abschnitt und der Auskehlung (13) angeordnet ist und diese Schicht eine Stärke zwischen 1 und 3 Millimeter aufweist.

## Claims

1. A vehicle transmission, including a gearbox (3) which can be coupled to an internal combustion engine (1) and which has a housing (3₁) and an outlet shaft (3₂), and an eddy current retarder (4) which is equipped with a stator (5) and a rotor (6), the stator being fastened to the gearbox housing (3₁) by fastener means including at least one fastener member (7), and the rotor being connected to the gearbox outlet shaft (3₂), one of the stator and the rotor including a ring of electromagnetic poles (9) centered on the gearbox outlet shaft (3₂) and the other including at least one annular element (8) of magnetic material which is also centered on the gearbox outlet shaft (3₂), the poles (9) and the annular element (8) being separated by an air gap (10) of small width (e), the transmission being characterized in that the fastener member (7) includes two rigid parts (11, 12) fastened rigidly respectively to the stator (5) of the retarder and to the gearbox housing (3₁), each of these two parts including a bearing surface (13, 14) which corresponds to at least part of a surface of revolution centered about the gearbox outlet shaft (3₂), the two bearing surfaces (13, 14) being arranged opposite one another and being separated by a layer (15) of an elastomeric material, this layer of elastomeric material being bonded to the two bearing surfaces (13, 14) to allow a certain amount of angular deflection of the two rigid parts (11, 12) relative to one another in rotation about the gearbox outlet shaft (3₂), the two rigid parts (11, 12) being substantially unmovable relative to one another in a direction parallel to the width (e) of the air gap (10).

2. A vehicle transmission according to claim 1, in which one of the two bearing surfaces is in the shape of a groove (13) which opens radially, whereas the other is a projecting portion (14) of shape substantially complementary to that of the groove, which penetrates radially into said groove, the fastener means (7) being angularly distributed around the gearbox outlet shaft (3₂), and the layer of elastomeric material interposed between the groove (13) and the projecting portion (14) is, at least in a direction parallel to the width (e) of the air gap, of a sufficiently small thickness (u) as to prevent substantially any relative displacement of the two rigid parts relative to one another in said direction parallel to the width of the air gap.

3. A transmission according to claim 2, in which the thickness of the layer (15) of elastomeric material lies in the range 1 mm to 3 mm.

4. A transmission according to claim 2 or 3, in which the width (e) of the air gap (10) extends axially and the elastomeric material is arranged at least axially on either side of the projecting portion (14) which penetrates into the groove (13).

5. A transmission according to claim 4, in which the groove (13) has a substantially channel-shaped cross-section with a base, and in which the elastomeric material is also arranged radially between the projecting portion (14) and the base of the channel-section groove.

6. A transmission according to any preceding claim, in which the elastomeric material is a silicone.

7. A transmission according to any preceding claim, in which the fastener means (7) include a plurality of fastener members angularly distributed about the gearbox outlet shaft (3₂), the bearing surfaces (13, 14) of each fastener member each extending angularly over a curvilinear length (L) lying in the range 50 mm to 100 mm.

8. A transmission according to any preceding claim, in which the fastener means (7) include a plurality of fastener members, at least one fastener member (7) having a stop (16) which is integral with one of its two rigid parts and which is intended to butt against the other of its two rigid parts to limit the angular deflection of the stator (5) relative to the gearbox housing (3₁) in a first angular direction, and at least one fastener member (7) having a stop (16) which is integral with one of its two rigid parts and which is intended to butt against the other of its two rigid parts to limit the angular deflection of the stator (5) relative to the gearbox housing (3₁) in a second angular direction.

9. A transmission according to claim 8, in which a portion of the layer (15) of elastomeric material is interposed with a certain clearance (j) between the stop (16) and the rigid part which co-operates with said stop.

10. A fastener member (7) for mounting a stator (5) of an eddy current retarder (4) onto a housing (3₁) of a gearbox in a vehicle transmission according to claim 5, the fastener member (7) being characterized in that it includes two rigid parts (11, 12) each having attachment means (11₁, 12₁) for rigidly fastening said parts onto the stator (5) of the retarder and onto the gearbox housing (3₁) respectively, each of these two parts including a bearing surface (13, 14) which corresponds to at least part of a surface of revolution centered about the gearbox outlet shaft (3₂) when the stator (5) is mounted on the housing (3₁) by means of the fastener member, the two bearing surfaces (13, 14) being arranged opposite one another and being separated by a layer (15) of an elastomeric material, one of the two bearing surfaces being in the shape of a groove (13) which opens radially inwardly, whereas the other is a projecting portion (14) of shape substantially complementary to that of the groove, which penetrates radially into said groove, the layer of elastomeric material being arranged axially on either side of the projecting portion (14) and radially between the projecting portion and the groove (13), and this layer having a thickness lying in the range 1 mm to 3 mm.
